Europäisches Patentamt

European Patent Office

Office européen des brevets

(19)

(11) Numéro de publication : **0 026 145**
**B2**

(12) **NOUVEAU FASCICULE DE BREVET EUROPÉEN**

(45) Date de publication du nouveau fascicule du brevet : 10.02.88

(51) Int. Cl.⁴ : **C 04 B   7/44**

(21) Numéro de dépôt : 80401348.0

(22) Date de dépôt : 19.09.80

(54) **Procédé de fabrication de produits à base de silicates et/ou aluminates calciques.**

(30) Priorité : 24.09.79 FR 7923737

(43) Date de publication de la demande :
01.04.81 Bulletin 81/13

(45) Mention de la délivrance du brevet :
08.02.84 Bulletin 84/06

(45) Mention de la décision concernant l'opposition :
10.02.88 Bulletin 88/06

(84) Etats contractants désignés :
AT BE CH DE FR GB IT LI LU NL SE

(56) Documents cités :
DE-A- 2 102 398
DE-A- 2 230 590
DE-A- 2 240 465
DE-A- 2 749 029
DE-B-   129 442
DE-B- 1 303 170
DE-B- 1 471 115
FR-A- 2 235 890
US-A- 3 203 681
ZEMENT-KALK-GIPS, no. 6, 1978 J. SVENDSEN:
"Alkaliarmer Zement aus Hochalkali-Rohstoffen mit
energiewirtschaftlich günstiger Verfahrenstechnik",
pages 281-284
CERAMIC ABSTRACTS, vol. 54, no. 5/6 mai-juin 1975,
page 100, colonne de droite, g F.P. GLASSER: "Production and Properties of some cements made by
plasma"

(73) Titulaire : **LAFARGE COPPEE**
**28, rue Emile Ménier**
**F-75782 Paris Cedex 16 (FR)**
**AT BE CH DE FR GB IT LI LU NL SE**
**ANVAR Agence Nationale de Valorisation de la**
**Recherche**
**43, rue Caumartin**
**F-75436 Paris Cedex 09 (FR)**
**FR**
**ELECTRICITE DE FRANCE Service National**
**2, rue Louis Murat**
**F-75008 Paris (FR)**
**AT BE CH DE FR GB IT LI LU NL SE**

(72) Inventeur : **Moisset, Jacques**
**2, Domaine de la Forêt**
**F-78112 Fourqueux (FR)**
Inventeur : **Bonet, Claude**
**342, rue Basse**
**F-45590 Saint-Cyr en Val (FR)**
Inventeur : **Rouanet, Alain**
**Résidence Grand Soleil**
**F-66120 Font-Romeu (FR)**
Inventeur : **Petit, Alain Châlet Poc à Poc**
**Lotissement Las Coumes d'Adal-Superbolquère**
**F-66210 Mont-Louis (FR)**
Inventeur : **Delmas, Robert**
**Bolquère**
**F-66210 Mont-Louis (FR)**
Inventeur : **Gold, Dieter**
**Immeuble Le Caillou Avenue F. Arago**
**F-66120 Font-Romeu (FR)**
Inventeur : **Chauvin, Gérard Dep. Ch. Process Engi-**
**neery**
**Hieriot Watt University Chambers Street**
**Edinbourg EH A1 1HX (GB)**

(74) Mandataire : **Phélip, Bruno et al**
**c/o Cabinet Harlé & Phélip 21, rue de la Rochefou-**
**cauld**
**F-75009 Paris (FR)**

EP 0 026 145 B2

**0 026 145**

## Description

La présente invention est relative à un procédé industriel de fabrication de ciment Portland ou alumineux ou de produits contenant une forte proportion de silicates dicalciques ou monocalciques et à l'installation pour la mise en œuvre de ce procédé.

Dans le procédé classique de fabrication de clinker de ciment Portland ou alumineux ou de produits contenant une forte proportion de silicates dicalciques ou monocalciques, on chauffe le cru, contenant du carbonate de calcium, dans une première phase jusqu'à une température de l'ordre de 900 °C pour le décarbonater. Dans le cas de la fabrication du ciment Portland, le cru décarbonaté est porté dans une seconde phase à une température de l'ordre de 1 500 °C dans un four en général rotatif où il est clinkérisé et où une partie, et une partie seulement, du produit fond. Dans le cas des produits du type ciments alumineux ou silicate monocalcique, la totalité du produit est frittée mais peut aussi être fondue. C'est le cas du ciment fondu ou du silicate monocalcique (brevet FR.1.584.873). Dans le cas de la fabrication classique du ciment Portland, il est connu que, lorsqu'on utilise des matières premières contenant des impuretés telles que des alcalins, sodium ou potassium, du chlore, du phosphore, du soufre, ces impuretés se retrouvent en grande partie dans le produit fritté, dont elles abaissent la qualité. Ces impuretés sont partiellement volatilisées dans les parties chaudes du four, mais, dans les procédés normaux classiques, le cru est décarbonaté en circulant à contre-courant des gaz chauds qui viennent du four de frittage, de clinkérisation ou de fusion et sont chargés de ces composants volatils. Ceux-ci se condensent en grande partie sur le cru froid et sont recyclés. Il se crée ainsi un circuit fermé dont les impuretés ne s'échappent qu'avec le produit traité, et qui peut en outre conduire à divers désordres tels que l'obturation de carneaux de gaz ou du four lui-même.

On peut diminuer les effets de ces recyclages en établissant des purges de gaz, mais cela entraîne une augmentation des consommations calorifiques et n'a qu'un effet limité sur les teneurs en impuretés du produit fini. On a proposé dans DE-B-1.303.170 un procédé de fabrication de clinker de ciment dans lequel, dans une première phase, on chauffe une matière première solide à l'aide de gaz chauds circulant à contre-courant, dans une deuxième phase on porte la matière chauffée à une température plus élevée de l'ordre de 1 300 à 1 500 °C pour la transformer en clinker, cette deuxième phase ayant lieu dans un four tournant muni d'un brûleur alimenté en un gaz comburant qui peut être de l'oxygène ou un gaz riche en oxygène, puis dans une troisième phase, on refroidit le clinker obtenu grâce à une circulation de gaz, les gaz chauds produits au cours de la troisième phase étant envoyés sur la matière première pour la chauffer au cours de la première phase, alors que les gaz chauds produits au cours de la seconde phase sont envoyés directement au dépoussiérage. Le procédé ne permet pas d'atteindre des températures suffisantes pour obtenir un produit fondu dépourvu d'impuretés alcalines ou analogues, en outre, il est peu avantageux en énergie en raison de la grande quantité de chaleur entraînée par les gaz produits dans la seconde phase.

On a également proposé (DE-A-2.230.590) un procédé analogue mais dans lequel le brûleur du four tournant, alimenté en oxygène ou en gaz enrichi en oxygène, est remplacé par l'envoi de « gaz de plasma » produit par un générateur MHD. Ces gaz ont une température de l'ordre de 2 000 °C, ce qui ne permet pas d'atteindre une température supérieure à 1 450 °C (page 8, alinéa 1). Les gaz chauds sortant du four tournant sont en partie envoyés à la première phase avec les gaz chauds produits dans la troisième phase, et en partie envoyés à la cheminée. Ce procédé ne permet pas d'obtenir une pureté convenable en raison des températures trop basses et du recyclage partiel des gaz, en outre il est coûteux en énergie et en investissement.

Des essais de laboratoire cf. l'article de F. P. Glasser paru dans « Cement and Concrete Research », 1975, vol. 5 pp ; 55-61, ont montré qu'un traitement au four à plasma d'un cru de ciment Portland permettait d'abaisser à moins de 0,05 % la teneur en potassium, au prix, il est vrai, d'une forte augmentation de la consommation d'énergie et sans amélioration nette des propriétés techniques du ciment obtenu. On a même dans la plupart des cas une détérioration de ces propriétés, par suite de la présence de phases vitreuses en quantité variable, mais souvent importante.

Diverses améliorations technologiques ont cependant été apportées aux fours à plasma. Il est permis notamment d'espérer obtenir des consommations d'énergie inférieures à celles des fours classiques.

Parmi les solutions avancées pour réduire la consommation d'énergie en dehors de celles qui concernent la structure même du four à plasma, on a proposé d'utiliser une matière première contenant du carbone ; celui-ci est transformé en CO dans le four, et le CO produit est envoyé dans une installation où on le brûle pour produire de l'électricité qui alimente le plasma. Une telle solution est ingénieuse, mais son rendement énergétique total est faible. On peut, plus simplement, faire passer les gaz produits dans une chambre d'un échangeur, l'autre chambre de celui-ci servant au préchauffage de la matière première. Une telle solution exige des investissements importants sans être parfaite au point du rendement. Elle est donc inférieure au chauffage direct de la matière par contact avec les gaz sortants, mais avec le chauffage direct, on retombe alors sur le problème du recyclage des impuretés qui a été exposé plus haut.

La présente invention a pour but de remédier aux inconvénients indiqués ci-dessus, et de fournir un clinker de ciment qui est débarrassé de la plupart des impuretés volatiles, ce résultat pouvant s'obtenir avec une consommation d'énergie peu importante, et comparable ou inférieure à celle des procédés

2

classiques de préparation de clinker, grâce au faible volume des gaz plasmagènes comparé à celui du comburant nécessaire pour la combustion d'un combustible organique.

Plus précisément, la présente invention fournit un procédé de fabrication de clinker contenant une proportion supérieure à 50 % d'un des produits suivants : silicate tricalcique, silicate dicalcique, aluminate monocalcique, ou de laitiers, dans lequel dans une première phase on chauffe une matière première solide contenant du carbonate de calcium jusqu'à une température élevée permettant la décarbonation du carbonate de calcium, mais inférieure à celle où les impuretés : métaux alcalins, chlore, soufre sont volatilisées, ce chauffage étant obtenu au moins en partie à l'aide de gaz chauds circulant à contre-courant de la matière première à chauffer et en contact direct avec elle, dans une seconde phase, on porte le produit ainsi obtenu à une température plus élevée encore, en présence d'une quantité de gaz réduite, et dans une troisième phase on refroidit le produit chauffé, les gaz mis en œuvre au cours de la seconde phase n'étant pas mis en contact avec la matière première de la première phase, ou n'étant mis en contact avec celle-ci que lorsque leur teneur en impuretés est à un niveau acceptable, caractérisé en ce que, dans la seconde phase, le produit résultant de la première phase traverse un four à plasma du type rotatif, dont l'axe est incliné de 30 à 60° sur l'horizontale et dont les dimensions et la puissance sont telles que ledit produit est porté à une température supérieure à 1 500 °C et fondu à plus de 80 %, et en ce que le gaz sort dudit four à plasma en entraînant les impuretés du produit qui sont volatiles à la température du traitement.

De préférence, les gaz chauds produits au cours de la troisième phase sont envoyés sur la matière première pour la chauffer au cours de la première phase, sans passer par l'enceinte où a lieu la seconde phase.

Il a été trouvé intéressant d'utiliser un four à plasma dont les électrodes sont en graphite pourvues d'un revêtement qui les protège contre l'oxydation, par exemple un revêtement de carbure de silicium ou de cuivre. De cette façon, il est possible d'opérer en atmosphère oxydante sans qu'il y ait consommation des électrodes par oxydation, ou tout au moins avec une consommation maintenue dans des limites acceptables. On peut ainsi réaliser des économies importantes en remplaçant comme gaz plasmogène, l'argon par des gaz plus courants tels que l'air, des fumées ou du $CO_2$.

Dans la pratique industrielle, il y a intérêt à utiliser, pour la seconde phase, un four rotatif dont l'axe est incliné au plus de 60° sur l'horizontale. En effet, un four vertical, tel que le four à plasma qui a servi pour les expériences décrites par F. P. Glasser dans l'article mentionné ci-dessus, ne permet d'obtenir que des temps de passage très courts. Ces temps conviennent pour de faibles débits de matière à granulométrie très fine, mais non pour une installation importante.

Les caractéristiques du four rotatif, notamment son inclinaison sur l'horizontale sont choisies en fonction du temps de séjour nécessaire et de la viscosité du produit liquide, lesquels dépendant à la fois de la nature du produit et des conditions de traitement. Pour du ciment Portland, on préfère habituellement des inclinaisons de 30 à 40°, alors que pour du ciment alumineux des valeurs de 50 à 60° sont plus indiquées.

L'invention sera expliquée plus en détail à l'aide d'exemples pratiques non limitatifs illustrés par les figures parmi lesquelles :

Figure 1 est une vue schématique d'une installation simple, avec four à plasma, fonctionnant selon l'invention.

Figure 2 est une vue d'une installation analogue à celle de la figure 1, mais comportant en outre un recyclage des gaz plasmagènes.

Figure 3 est une vue d'une installation analogue à celle de la figure 1, mais comportant en outre l'utilisation des gaz plasmagènes pour le préchauffage du cru.

Figure 4 est une vue d'une installation analogue à celle de la figure 1 mais avec alimentation directe du four à plasma en cru décarbonaté par les fumées d'un four à fuel.

Figure 5 est une vue montrant les modifications d'une installation existante à four long entraînées par l'adoption du procédé de l'invention.

Figure 6 est une vue analogue à celle de la figure 5, mais pour une installation à échangeur vertical.

Figure 7 est une vue analogue à celle des figures 5 et 6 mais pour une installation à échangeur vertical et précalcinateur.

L'élément essentiel des dispositifs décrits ci-après à titre d'exemples est un four à chauffage à température élevée, et typiquement un four de fusion rotatif dont l'axe de rotation est incliné de 30 à 60° par rapport à l'horizontale et chauffé par plasma (repère 1 sur les figures) qui peut être préférablement du type ANVAR-FOEX avec une chauffe par plasma étiré ou par plasma triphasé.

Ce four peut être alimenté en cru décarbonaté ou en produits déjà frittés. Son rôle est de porter à fusion totale, à une température supérieure à 1 800 °C, et même 1 950 °C suivant le produit traité, le cru décarbonaté ou le clinker précuit dans un autre appareil. Il permet ainsi d'obtenir, avec une consommation électrique cinq à dix fois plus faible que celle obtenue dans les procédés de fusion par plasma déjà décrits, un produit totalement fondu et débarrassé d'une grande partie de ses impuretés.

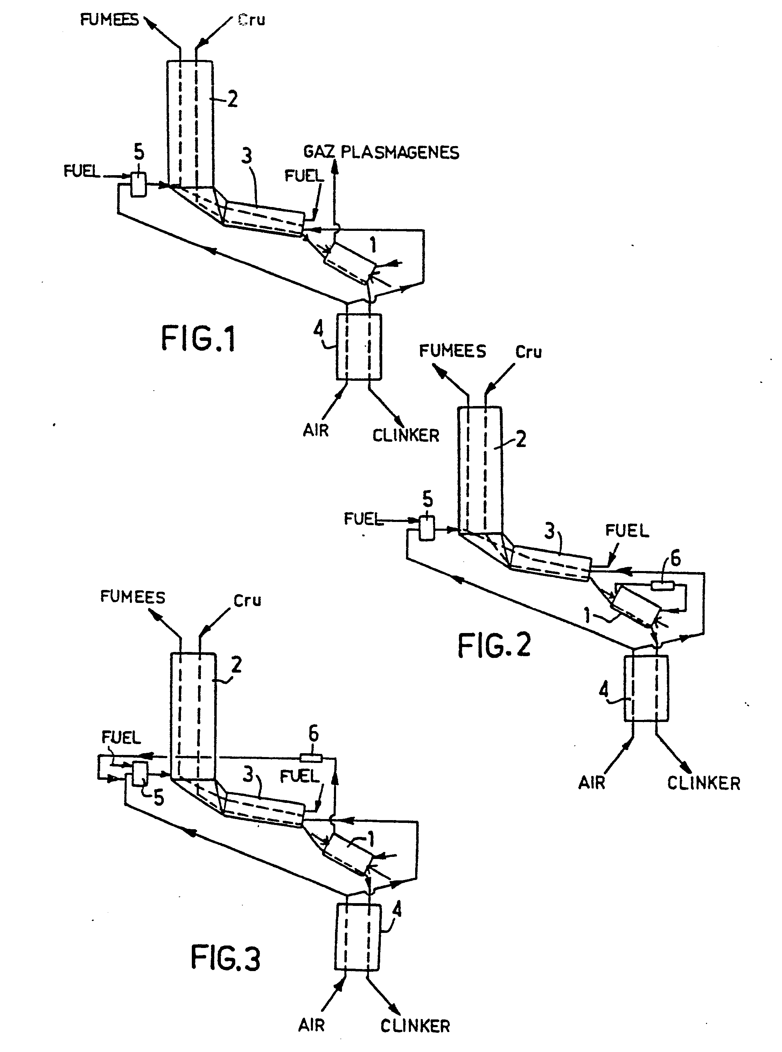

La figure 1 représente en quelque sorte le schéma de base de l'installation qui comprend, dans l'ordre du parcours du produit, un préchauffeur-décarbonateur de cru 2, un four rotatif 3, le four de fusion 1 et un refroidisseur de clinker 4. Les gaz, à la différence des installations classiques, ne cheminent pas à contre-courant des produits dans toute l'installation, mais passent du refroidisseur 4 au four rotatif 3 et au

3

préchauffeur-décarbonateur 2 en évitant le four de fusion 1. A la sortie du refroidisseur, l'air chauffé au contact du clinker va en partie au four rotatif, où il alimente la combustion du brûleur à fuel, et en partie au foyer 5 de chauffage du préchauffeur-décarbonateur 2. Comme indiqué à la figure 1, les gaz plasmagènes sortant du four de fusion 1 et qui représentent un volume de moins de 0,150 Nm³/Kwh, ce chiffre pouvant descendre à 0,08 Nm³/Kwh, sont évacués en entraînant pratiquement toutes les impuretés volatilisées, mais transportent beaucoup moins d'énergie que dans le cas des purges des gaz de combustion en particulier dans les procédés traditionnels de fabrication de clinker de ciment Portland (jusqu'à 6 fois moins).

A la figure 2, on a représenté une variante dans laquelle les gaz plasmagènes sont recyclés dans le four 1 après passage dans un condenseur 6, où les impuretés sont séparées.

A la figure 3, on a représenté une autre variante du procédé, où après passage dans le condenseur 6, les gaz plasmagènes vont apporter la chaleur sensible qui leur reste au préchauffeur-décarbonateur 2, en passant pas le foyer 5, et sont ensuite évacués.

Il est évident que le choix entre ces deux variantes dépend du rapport des prix entre l'énergie électrique, utilisée dans le four 1, et le fuel, utilisé dans le foyer 5.

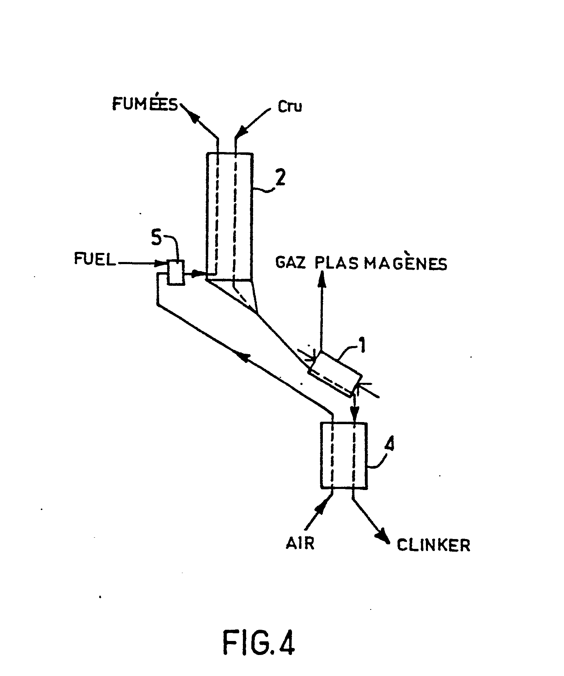

La figure 4 correspond à l'alimentation directe du four 1 en cru décarbonaté. Dans ce cas, les gaz sortant du refroidisseur 4 sont tous envoyés au foyer 5. Cette solution permet la suppression du four rotatif.

La disposition de la figure 4 peut être combinée avec celle de la figure 2, qui comporte un recyclage des gaz plasmagènes (sortant du four 1) à travers un condensateur 6, et avec celle de la figure 3, les gaz plasmagènes sortant du four 1 étant alors ramenés à travers le condenseur 6, dans le préchauffeur-décarbonateur 2. Le choix des diverses solutions illustrées par les figures est fonction de nombreux facteurs parmi lesquels, comme il a été dit plus haut, le rapport entre les prix du fuel et de l'électricité.

Un avantage du procédé selon l'invention réside dans le fait que comme il n'y a pas à prévoir de passage du gaz entre le refroidisseur de clinker et le four à haute température, qu'il soit ou non à plasma, il est plus facile d'obtenir des refroidissements très rapides. Une autre particularité du procédé selon l'invention est de permettre l'emploi de sources avec lesquelles on peut atteindre de très hautes températures, nettement supérieures au point de fusion du produit sans que la consommation d'énergie en soit augmentée de façon prohibitive.

Il en résulte des possibilités accrues d'agir sur les propriétés finales du clinker en modifiant le mode de refroidissement : si le produit est porté à l'état liquide, on peut choisir entre un refroidissement lent, par coulée en lingotières, et un refroidissement rapide par trempe à l'air ou à l'eau. On sait qu'un refroidissement rapide ou très rapide augmente la teneur en chaux libre et diminue la teneur en aluminoferrites pour les produits contenant de la chaux, des alumines et des oxydes de fer.

On peut donc agir sur la rapidité de prise ou sur la résistance à longue échéance.

On donne ici, à titre d'exemple, les résistances de ciments Portland, en MPa, d'éprouvettes de ciment, préparées en pâte pure avec un rapport E/C (eau/ciment en poids) de 0,5 :

A représente un témoin,

B un ciment obtenu à partir du même clinker, fondu au four à plasma et trempé à l'eau,

C le même ciment que B mais trempé à l'air,

D le même ciment que B et C mais refroidi lentement,

E un ciment obtenu à partir du même cru que les précédents, ce cru étant chauffé directement dans le four à plasma puis trempé à l'eau.

| | Résistance en M. Pascal après | | |
|---|---|---|---|
| | 1 jour | 7 jours | 28 jours |
| A | 4 | 24 | 40 |
| B | 4,5 | 26 | 44 |
| C | 4 | 23,5 | 50 |
| D | 6,5 | 35 | 53 |
| E | 8 | 28,5 | 58 |

Le procédé de l'invention permet de diminuer fortement la teneur en impuretés volatiles du clinker obtenu.

On donne ci-après, à titre d'exemples, les analyses obtenues dans :
— le cas du traitement d'un cru industriel.

4

|  | cru d'usine ramené à 100 | cru fondu et trempé à l'eau |
|---|---|---|
| Insolubles ) | | 0,05 |
| ) | 23,20 | |
| $SiO_2$ ) | | 23,10 |
| $Al_2O_3$ | 4,65 | 4,65 |
| $Fe_2O_3$ ) | 2,90 | 2,40 |
| FeO ) | | 0,10 |
| CaO | 66,50 | 66,85 |
| MgO | 1,40 | 1,50 |
| $SO_3$ ) | | 0,05 |
| ) | | |
| $CO_2$ ) | 0,48 | 0,25 |
| Eau-MV* ) | | 0,40 |
| $K_2O$ total | 0,72 | 0,11 |
| $Na_2O$ total | 0,15 | 0,05 |
| Total | 100 | 99,51 |
| CaO libre | - | 1,55 |

MV* = matières volatiles.

— le cas du traitement d'un clinker industriel

|  | clinker industriel | clinker traité et trempé à l'eau | clinker traité et refroidi à l'air |
|---|---|---|---|
| Insolubles | 0,35 | 0,20 | 0,15 |
| $SiO_2$ | 21,65 | 22,45 | 22,30 |
| $Al_2O_3$ | 4,90 | 5,15 | 5,25 |
| $Fe_2O_3$ | 3,15 | 3,18 | 3,35 |
| FeO | 0,10 | 0,18 | 0,06 |
| MgO | 1,75 | 1,40 | 1,50 |
| CaO | 66,00 | 66,50 | 66,46 |
| Chaux libre | 0,15 | 0,60 | 0,45 |
| $SO_3$ | 0,75 | 0,10 | 0,15 |
| $K_2O$ total | 0,70 | 0,18 | 0,20 |
| $Na_2O$ total | 0,50 | 0,06 | 0,13 |
| $K_2O$ soluble | 0,59 | 0,01 | 0,05 |
| $Na_2O$ soluble | 0,07 | 0,01 | 0,08 |

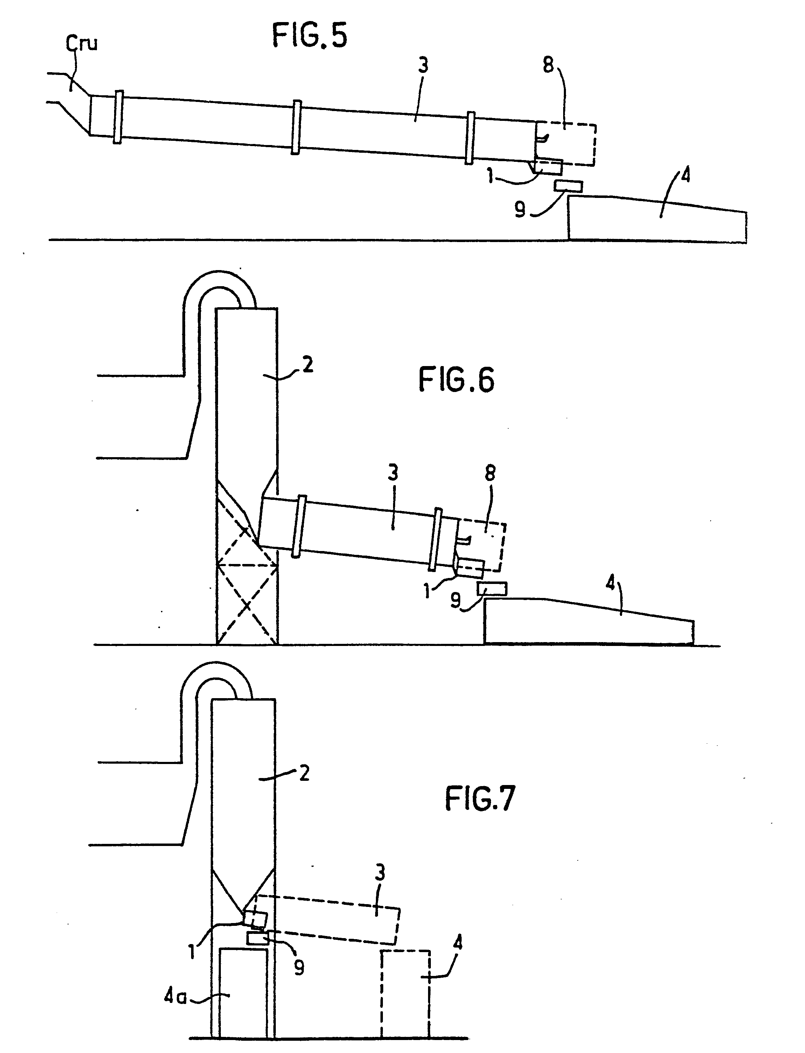

Sur les figures 5 à 7 on a représenté la transformation de trois types d'installations préexistants pour les adapter au procédé de l'invention. La figure 5 montre une installation du type « à four long », le cru étant introduit directement dans un four rotatif 3. La transformation consiste à enlever l'extrémité de sortie 8, c'est-à-dire la plus chaude, du four 3, et à disposer à la place le four à plasma 1, suivi, si on le désire d'un granulateur 9 qui est conservé. Les gaz chauds sortant du refroidisseur sont envoyés directement dans le four tournant, conformément aux schémas des figures 1 à 4.

La figure 6 montre une installation avec un préchauffeur-décarbonateur vertical et un four rotatif. La transformation ici encore, consiste essentiellement à enlever la partie la plus chaude du four 3 et à la remplacer par le four à plasma 1, et éventuellement le granulateur de produit fondu 9.

La figure 7 montre une installation avec préchauffeur-décarbonateur vertical dont la partie inférieure constitue un pré-calcinateur et un four tournant de plus petite longueur. Dans ce cas, la transformation consiste en la suppression complète du four rotatif 3 ; le four à plasma et le granulateur éventuel, en raison de leurs faibles dimensions peuvent être placés sous le précalcinateur, et le refroidisseur 4 peut être placé en 4a sur la même verticale, ce qui donne un ensemble particulièrement compact. L'invention porte sur les installations selon les figures 5 à 7 dans la mesure où l'axe du four à plasma est incliné de 30 à 60° sur l'horizontale.

Les mêmes installations permettent la fabrication de produits à base de silicate dicalcique, de silicate monocalcique, d'aluminate monocalcique. Pour ces deux derniers produits, certains procédés conduisent à une fusion et le produit est coulé en lingotière ou granulé. Le nouveau procédé offre la possibilité d'obtenir rapidement de hautes températures, ce qui diminue la viscosité du produit et facilite ainsi la coulée du produit tout en réduisant très fortement les pertes par les parois et les fumées par rapport aux procédés classiques, ou ces pertes sont augmentées par le fait que les températures demandées sont à la limite de ce qui peut être obtenu avec les combustibles fossiles brûlés à l'air. L'invention permet ainsi une réduction importante de la consommation calorifique liée à la fabrication de tels produits. Cette réduction n'était pas évidente puisqu'elle coïncide avec une élévation des températures maximales. Elle peut atteindre 2 400 Kj/kg, soit 33 % dans le cas de ciments alumineux, à 14 000 Kj/kg soit 85 % dans celui de la fabrication par fusion de silicate monocalcique.

L'essai de fabrication de ciment décrit plus haut a été réalisé en utilisant de l'argon, comme gaz plasmagène. D'autres essais ont été réalisés avec des résultats similaires en utilisant de l'air ou bien des fumées, les électrodes du four à plasma étant alors en graphite revêtu de carbure de silicium ou de cuivre. Le $CO_2$ a également été utilisé avec un succès dans des essais de fusion d'oxydes réfractaires.

## Revendications

1. Procédé de fabrication de clinker contenant une proportion supérieure à 50 % d'un des composés suivants : silicate tricalcique, silicate dicalcique, silicate monocalcique, aluminate monocalcique, ou de laitiers, dans lequel, dans une première phase on chauffe une matière première solide contenant du carbonate de calcium jusqu'à une température élevée permettant la décarbonation du carbonate de calcium, mais inférieure à celle où les impuretés : métaux alcalins, chlore, soufre sont volatilisées, ce chauffage étant obtenu au moins en partie à l'aide de gaz chauds circulant à contre-courant de la matière première à chauffer et en contact direct avec elle, dans une seconde phase on porte le produit ainsi obtenu à une température plus élevée encore, en présence d'une quantité de gaz réduite, et dans une troisième phase on refroidit le produit chauffé, les gaz mis en œuvre au cours de la seconde phase n'étant pas mis en contact avec la matière première de la première phase, ou n'étant mis en contact avec celle-ci que lorsque leur teneur en impuretés est à un niveau acceptable, caractérisé en ce que, dans la seconde phase, le produit résultant de la première phase traverse un four à plasma du type rotatif, dont l'axe est incliné de 30 à 60° sur l'horizontale et dont les dimensions et la puissance sont telles que ledit produit est porté à une température supérieure à 1 500 °C et fondu à plus de 80 %, et en ce que le gaz sort dudit four à plasma en entraînant les impuretés du produit qui sont volatiles à la température du traitement.

2. Procédé selon la revendication 1, caractérisé en ce que les gaz chauds produits au cours de la troisième phase sont envoyés sur la matière première pour la chauffer au cours de la première phase sans passer par l'enceinte où a lieu la seconde phase.

3. Procédé selon la revendication 1 ou 2, caractérisé en ce que la température atteinte par le produit dans la seconde phase est supérieure à 1 800 °C.

4. Procédé selon la revendication 3, caractérisé en ce que la température atteinte par le produit dans la seconde phase est supérieure à 1 950 °C.

5. Procédé selon l'une des revendications 1 à 4, caractérisé en ce que les gaz utilisés dans ladite seconde phase sont utilisés au moins en partie comme gaz plasmagènes dans le four à plasma.

6. Procédé selon l'une des revendications 1 à 5, caractérisé en ce qu'on fait subir au produit fondu un refroidissement rapide ou très rapide à l'air ou à l'eau.

7. Procédé selon l'une des revendications 1 à 5, caractérisé en ce qu'on fait subir au produit fondu un refroidissement lent en lingotière.

8. Procédé selon l'une des revendications 1 à 7, caractérisé en ce qu'on recycle dans la seconde phase les gaz qui en sortent après en avoir séparé par condensation les impuretés volatilisées dans cette seconde phase.

9. Procédé selon l'une des revendications 1 à 8, caractérisé en ce qu'on envoie dans la première phase les gaz sortant de la seconde phase après en avoir séparé par condensation les impuretés volatilisées dans cette seconde phase.

10. Procédé selon l'une des revendications 1 à 9, caractérisé en ce qu'on utilise comme gaz plasmagène un gaz oxydant tel que l'air ou les fumées, et en ce que les électrodes du four à plasma sont des électrodes en graphite et portent un revêtement de protection contre l'oxydation, tel que du carbure de silicium ou du cuivre.

**Claims**

1. Process for the manufacture of clinker containing a proportion of more than 50 % of one of the following compounds : tricalcium silicate, dicalcium silicate, monocalcium silicate, monocalcium aluminate, or of slags, wherein, in a first stage, a solid raw material containing calcium carbonate is heated to a high temperature at which the calcium carbonate can be decarbonated, this temperature being lower, however, than that at which the impurities : alkali metals, chlorine and sulphur, are volatilized, this heating being effected at least in part using hot gases circulating countercurrentwise to the raw material to be heated and in direct contact therewith, in a second stage the product thus obtained is brought to an even higher temperature, in the presence of a reduced quantity of gas, and in a third stage the heated product is cooled, the gases used during the second stage not being brought into contact with the raw material of the first stage, or only being brought into contact there with when their content of impurities is at an acceptable level, characterized in that, in the second stage, the product resulting from the first stage passes through a plasma furnace of the rotary type, whose axis is inclined at 30 to 60° to the horizontal and whose dimensions and power are such that the said product is brought to a temperature which is above 1,500 °C and is more than 80 % fused, and in that the gas leaves the said plasma furnace carrying away the impurities in the product which are volatile at the treatment temperature.

2. Process according to Claim 1, characterized in that the hot gases produced during the third stage are passed over the raw material in order to heat it during the first stage without passing through the enclosure where the second stage takes place.

3. Process according to Claim 1 or 2, characterized in that the temperature reached by the product in the second stage is above 1,800 °C.

4. Process according to Claim 3, characterized in that the temperature reached by the product in the second stage is above 1,950 °C.

5. Process according to one of Claims 1 to 4, characterized in that the gases used in the said second stage are used at least in part as plasmagenic gases in the plasma furnace.

6. Process according to one of Claims 1 to 5, characterized in that the fused product is subjected to rapid or very rapid cooling with air or water.

7. Process according to one of Claims 1 to 5, characterized in that the fused product is subjected to slow cooling in an ingot mould.

8. Process according to one of Claims 1 to 7, characterized in that the gases which leave the second stage are recycled into the second stage after the impurities volatilized in this second stage have been separated from them by condensation.

9. Process according to one of Claims 1 to 8, characterized in that the gases leaving the second stage are passed into the first stage after the impurities volatilized in this second stage have been separated from them by condensation.

10. Process according to one of Claims 1 to 9, characterized in that the plasmagenic gas used is an oxidizing gas such as air or the fumes, and in that the electrodes of the plasma furnace are graphite electrodes and carry a coating for protection against oxidation, such as silicon carbide or copper.

**Patentansprüche**

1. Verfahren zur Herstellung von Klinkern mit einem Gehalt von mehr als 50 % eines der folgenden Produkte : Tricalciumsilikat, Dicalciumsilikat, Monocalciumsilikat, Monocalciumaluminat oder Schlacken, bei dem man in einer ersten Phase ein festes Ausgangsmaterial enthaltend Calciumcarbonat bis auf eine erhöhte Temperatur erhitzt, die die Entcarbonisierung des Calciumcarbonats ermöglicht, jedoch unterhalb derjenigen liegt, bei der die Verunreinigungen alkalische Metalle, Chlor, Schwefel sich verflüchtigen, wobei die Erhitzung wenigstens teil weise durch heißes Gas erhalten wird, das im Gegenstrom zu den zu erhitzenden Ausgangsmaterialien und in direktem Kontakt mit diesen zirkuliert, in einer zweiten Phase das so erhitzte Ausgangsmaterial auf eine noch höhere Temperatur in Anwesenheit einer verminderten Menge an Gas bringt und in einer dritten Phase das erhitzte Material abkühlt, wobei das während der zweiten Phase eingesetzte Gas mit dem Ausgangsmaterial der ersten Phase nicht oder nur dann in Kontakt gebracht wird, wenn der Gehalt an Verunreinigungen auf einem akzeptablen Niveau liegt, dadurch gekennzeichnet, daß man während der zweiten Phase das während der ersten Phase hergestellte Produkt einen Plasmadrehofen passieren läßt, dessen Achse um 30 bis 60° gegen die Horizontale geneigt ist, und dessen Abmessungen und Leistung derart sind, daß das genannte Produkt auf eine Temperatur oberhalb 1 500 °C gebracht wird und zu mehr als 80 % geschmolzen wird, und daß das aus diesem Plasmaofen austretende Gas die Produktverunreinigungen austrägt, die bei der Behandlungstemperatur flüchtig sind.

2. Verfahren nach Anspruch 1, dadurch gekennzeichnet, daß die während der dritten Phase erzeugten heißen Gase auf das Ausgangsmaterial geleitet werden für dessen Aufheizung während der ersten Phase, ohne durch die Einfassung zu passieren, wo die zweite Phase erfolgt.

3. Verfahren nach Anspruch 1 oder 2, dadurch gekennzeichnet, daß die von dem Produkt während der zweiten Phase erreichte Temperatur oberhalb 1 800 °C liegt.

4. Verfahren nach Anspruch 3, dadurch gekennzeichnet, daß die von dem Produkt während der zweiten Phase erreichte Temperatur oberhalb 1 950 °C liegt.

5. Verfahren nach einem der Ansprüche 1 bis 4, dadurch gekennzeichnet, daß die während der genannten zweiten Phase eingesetzten Gase mindestens teilweise als plasmaerzeugende Gase in dem Plasmaofen verwendet werden.

6. Verfahren nach einem der Ansprüche 1 bis 5, dadurch gekennzeichnet, daß man das geschmolzene Produkt einer schnellen oder sehr schnellen Abkühlung durch Luft oder Wasser aussetzt.

7. Verfahren nach einem der Ansprüche 1 bis 5, dadurch gekennzeichnet, daß man das geschmolzene Produkt einer langsamen Abkühlung in Kokillen aussetzt.

8. Verfahren nach einem der Ansprüche 1 bis 7, dadurch gekennzeichnet, daß man in der zweiten Phase die Gase rezyklisiert, die aus ihr austreten, nachdem man von ihnen die Verunreinigungen durch Kondensation abgeschieden hat, die während der zweiten Phase verflüchtigt wurden.

9. Verfahren nach einem der Ansprüche 1 bis 8, dadurch gekennzeichnet, daß man in der ersten Phase die aus der zweiten Phase austretenden Gase zuführt, nachdem von ihnen die Verunreinigungen abgetrennt hat, die während dieser zweiten Phase verflüchtigt wurden.

10. Verfahren nach einem der Ansprüche 1 bis 9, dadurch gekennzeichnet, daß man als plasmaerzeugendes Gas ein oxidierendes Gas einsetzt, wie Luft oder Dämpfe, und daß die Elektroden des Plasmaofens Graphitelektroden sind und eine Schutzbeschichtung gegen Oxidation aufweisen, wie Siliziumcarbid oder Kupfer.

0 026 145

FIG.1

FIG.2

FIG.3

FUMÉES    Cru

FUEL

5

2

GAZ PLAS MAGÈNES

1

4

AIR    CLINKER

# FIG.4

FIG.5

Cru

3

8

1

9

4

FIG.6

2

3

8

1

9

4

FIG.7

2

3

1

9

4

4a